Europäisches Patentamt

European Patent Office

Office européen des brevets

(11) Publication number: **0 139 755**
**A1**

# EUROPEAN PATENT APPLICATION

published in accordance with Art. 158(3) EPC

(21) Application number: **84901003.8**

(22) Date of filing: **01.03.84**

Data of the international application taken as a basis:

(86) International application number:
**PCT/JP84/00073**

(87) International publication number:
**WO84/03420 (13.09.84 84/22)**

(51) Int. Cl.⁴: **A 23 G 3/00**
**A 23 L 1/18, A 21 D 13/08**

(30) Priority: **02.03.83 JP 34187/83**

(43) Date of publication of application:
**08.05.85 Bulletin 85/19**

(84) Designated Contracting States:
**DE FR**

(71) Applicant: **IKEGAI TEKKO KABUSHIKI KAISHA**
**13-16, Mita 3-chome**
**Minato-ku, Tokyo 108(JP)**

(72) Inventor: **SAWADA, Takehiko**
**2-2-2-1-104, Shirahatadai Miyamae-ku**
**Kawasaki-shi Kanagawa 213(JP)**

(72) Inventor: **MIYAZAWA, Masanori**
**3-3-8-403, Azamino Midori-ku**
**Yokohama-shi Kanagawa 227(JP)**

(72) Inventor: **KIKUCHI, Noriyuki**
**183-1, Terayama-cho Midori-ku**
**Yokohama-shi Kanagawa 226(JP)**

(74) Representative: **Patentanwälte Schulze Horn und**
**Hoffmeister**
**Goldstrasse 36**
**D-4400 Münster(DE)**

(54) **METHOD OF MANUFACTURING FOAMED FOODSTUFF.**

(57) A method of manufacturing a foamed foodstuff comprises the steps of inserting powdered and granular ingredients for a foodstuff into an extruder (1) of which a cylinder (5) is provided thereof with two screws (2) which mesh with each other and rotate at high speed in the same direction, mixing and heating the ingredients in a preheating zone (8), adding a predetermined quantity of a liquid to the mixed ingredients in a liquid-addition zone (9), kneading the moistened ingredients in a kneading zone (10), transforming the starch in the ingredients into alpha starch in an alpha formation zone (11), and then extruding the ingredients from the extruder. The method, therefore, requires no separate operation of adding the liquid to the ingredients and kneading them before they are loaded into the extruder. The kneading operation and the alpha starch formation operation are both conducted automatically and continuously within the extruder, so that a uniform product can be produced efficiently. The method is particularly effective for confectionery and the like.

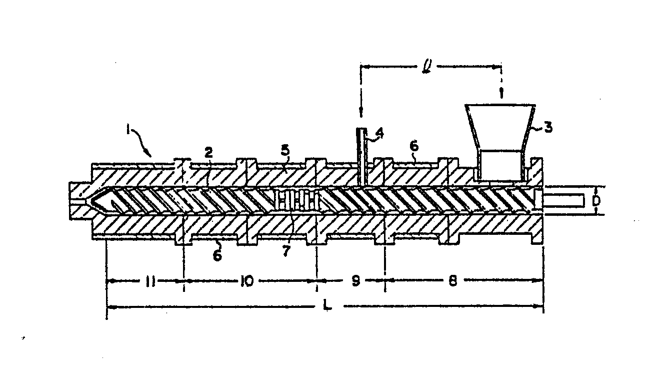

./...

- 1 -

## METHOD OF MANUFACTURING FOAMED FOODSTUFF

Technical Field

This invention relates to a method of manufacturing a foamed foodstuff by using powdered and granular ingredients.

Background Art

The art of manufacturing foamed foodstuff by processing powdered and granular ingredients using a screw extruder has usually be well known. In the prior art, as described above, the ingredients must be added with a liquid and kneaded to the full before the ingredients are inserted in the extruder. Therefore, the prior art necessitates the kneader therefor or manual troublesome operations therefor. Further, as the ingredients are slurry-like, it is difficult to heat the ingredients uniformly in the extruder and to obtain homogeneous products. Accordingly, the prior art is disadvantageous in that when slowing down the rotation speed of the screw for the purpose of eluding the above drawbacks, not only the productive efficiency decreases but also the residence time in the extruder is prolonged, and so it is difficult to control the degree of the starch in the ingredients so as not to cause alpha formation, consequently the ingredients must be extruded as-half roasted from the extruder, and thereafter the ingredients must be baked in the oven for the purpose of foaming.

The object of this invention is to provide a method of manufacturing a foamed foodstuff wherein the above mentioned drawbacks inherent in the usual manufacturing method are eliminated; the operation of kneading the ingredients previously or the kneader therefor becomes useless; the mixing and heating of the ingredients, addition of a liquid, kneading and heating

- 2 -

of the ingredients and alpha formation to the starch contained in the ingredients are carried out in the same cylinder successively and automatically to thereby achieve a high productive efficiency; and further the obtained products are homogenous.

Disclosure of Invention

This invention is designed so that an extruder provided with two screws, which mesh together and rotate at high speed in the same direction, is used; powdered and granular ingredients for a foodstuff are inserted in said extruder and conveyed by said screws; during this the ingredients are mixed and heated in a preheating zone, in succession a predetermined quantity of a liquid is added to this mixed ingredients in a liquid-addition zone, this liquid-added ingredients are kneaded and heated in a following kneading zone, and the kneaded ingredients are subjected to alpha formation in a succeeding alpha formation zone; and thereafter said ingredients are extruded automatically from the extruder.

According to this invention as described above, there is no necessity of previously kneading the powdered and granular ingredients with a liquid added by virtue of another device or operation before the powdered and granular ingredients are inserted in the extruder, and the above mentioned kneading operation together with the preceding heat-mixing operation and the successive operation of forming alpha to the starch contained in the material are carried out continuously as well as automatically by the action of two screws which rotate at high speed in the same direction while meshing each other in the same cylinder, whereby the kneading and heating operations are carried out uniformly for producing homogeneous products in a high efficiency, the degree of alpha formation can be controlled readily, and further the inside of the cylinder is subjected to self-cleaning by the screws.

Brief Explanation of Drawing

Fig. 1 is a vertical front view of the extruder used in the method of manufacturing a foamed foodstuff according to this invention.

Best Mode of carrying out Invention

In Fig. 1, reference numeral 1 denotes an extruder. This extruder 1 includes a cylinder 5 formed by combining 6 cylinder blocks, two screws 2 (one screw alone is illustrated), a hopper 3 provided at the rear of said cylinder 5 and a liquid injection nozzle 4 located in front of said hopper.

In the above mentioned extruder, the screw 2 may be provided with one or multi-screw threads having a meshing angle of 40-65° and further may comprise the combination of some divided ones, and is arranged to be rotated at 100-300 rpm in the same direction by the action of an unillustrated driving means. In addition, this screw 2 is provided with a kneading member 7 in the middle of the screw thread located in the front of the nozzle 4.

The screw 2 has the ratio of length L to diameter D (L/D ratio) of 10-18, and is provided with a pre-heating zone 8, a liquid - addition zone 9, a kneading zone 10 and an alpha formation zone 11 from the rear to the front. On the outer periphery of the cylinder 5 there is provided a heater 6 which is designed to maintain the zone 8 at 60-100°C, the zone 9 at 80-90°C, the zone 10 at 120-130°C and the zone 11 at 150-200°C. The extruder illustrated in Fig. 1 may be built-up, as described above, of a proper number of blocks other than 6 blocks.

The distance $\ell$ between the hopper 3 and the nozzle 4 desirably is held at L/D x (3-6).

- 4 -

On manufacturing a foamed foodstuff using the above mentioned extruder, powdered and granular ingredients are inserted through the hopper 3 in the cylinder 1 which is driven by the screw 2 and is mixed at the preheating zone 8 while heating to a temperature of 60-100°C. The thus mixed and conveyed ingredients are added to the liquid - addition zone 9 together with a predetermined quantity of a liquid from the nozzle 4. These ingredients are heated to 80-90°C in the zone 9 and to 120-130°C in the kneading zone 10, during which these ingredients are kneaded by means of screw threads and the kneading member 7 into a slurry state and conveyed to the alpha formation zone 11. The slurry-like ingredients are heated in this alpha formation zone 11 to a temperature of aforesaid 150-200°C which is over the liquid evaporative temperature, whereby the starch contained in the ingredients is subjected to alpha formation and at this time vapor pressure is caused. The ingredients are discharged from the extruder 1, while holding this pressure therein, to the air, and is made into foodstuffs foamed by expansion of vaporous particles.

Example

Ingredients comprising "wheat flour, sugar, common salt and liquid (weight ratio 3%)" were inserted in the extruder 1 wherein the screw (D=46mm, L/D=15) was rotated at the speed of rotation of 220-250 rpm in the cylinder 5 ( ℓ=L/D x 3) and the temperatures of the zones 8, 10 and 11 were raised to 80, 130 and 180°C respectively. And, this extruder was set in motion. Thus, there were obtained products, whose expansion ratio was homogenous three times, in good yields of 60-70 kg/hr.

Industrial Usability

The method of manufacturing foamed foodstuff according to this invention is usably applicable to the food industry, in particular the confectionery industry.

- 6 -

Claims

1. A method of manufacturing a foamed foodstuff which comprises the steps of inserting powdered and granular ingredients for a foodstuff into an extruder of which a cylinder is provided with two screws which mesh with each other and rotate at high speed in the same direction, mixing and heating the ingredients in a preheating zone, adding a predetermined quantity of a liquid to the mixed ingredients in a liquid-addition zone, kneading and heating the moistened ingredients in a kneading zone, heating and transforming the starch in the ingredients into alpha starch in an alpha formation zone and then extruding the ingredients from the extruder for foamation.

2. A method of manufacturing a foamed foodstuff according to Claim 1 wherein the ingredients are heated to 60-100°C, 130°C and 150-200°C at each of said preheating zone, kneading zone and alpha formation zone.

3. A method of manufacturing a foamed foodstuff according to Claim 1 or Claim 2 wherein said extruder has the ratio of length L to diameter D L/D in the range of 10-18, the number of rotation of the screw in the range of 100-300 rpm and the distance between a hopper for inserting the ingredients and a nozzle for adding the liquid is set to be L/D x (3-6).

# INTERNATIONAL SEARCH REPORT  0139755

International Application No  PCT/JP84/00073

## I. CLASSIFICATION OF SUBJECT MATTER (if several classification symbols apply, indicate all) [3]

According to International Patent Classification (IPC) or to both National Classification and IPC

Int Cl[3]  A23G3/00, A23L1/18, A21D13/08

## II. FIELDS SEARCHED

| Minimum Documentation Searched [4] | |
|---|---|
| Classification System | Classification Symbols |
| IPC | A23G3/00-3/02, A23L1/18, A21D13/08, A23J3/00 |

| Documentation Searched other than Minimum Documentation to the Extent that such Documents are Included in the Fields Searched [5] | | |
|---|---|---|
| | Jitsuyo Shinan Koho | 1945 – 1984 |
| | Jitsuyo Shinan Kokai Koho | 1971 – 1984 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| X | S.A. Mazz (author), Kikuchi Kazunori (translator), "Snack foods", 25 December, 1980 (25. 12. 80), Korin Kabushiki Kaisha, P. 269-270 | 1, 2 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| May 26, 1984 (26. 05. 84) | June 4, 1984 (04. 06. 84) |

| International Searching Authority [1] | Signature of Authorized Officer [20] |
|---|---|
| Japanese Patent Office | |

Form PCT/ISA/210 (second sheet) (October 1981)